# FASCICULE DE BREVET EUROPEEN

(11) **EP 4 477 939 B1**
(45) Date de publication et mention de la délivrance du brevet: **25.02.2026**
(21) Numéro de dépôt: 24179317.3
(22) Date de dépôt: 31.05.2024
(51) Int. Cl.: F17C 3/02

(54) **CUVE DE RÉSERVOIR COMPRENANT UNE VIROLE ET AU MOINS UNE PAROI D' EXTRÉMITÉ ASSEMBLÉES DE MANIÈRE À LIMITER LES DÉFORMATIONS DE LADITE PAROI D' EXTRÉMITÉ**
TANKWANNE MIT EINEM MANTEL UND MINDESTENS EINER STIRNWAND, ZUSAMMENGEFÜGT IN EINER WEISE UM VERFORMUNGEN DER STIRNWAND ZU LIMITIEREN
TANK COMPRISING A FERRULE AND AT LEAST ONE END WALL ASSEMBLED IN SUCH A WAY AS TO LIMIT THE DEFORMATIONS OF SAID END WALL

(30) Priorité: 13.06.2023 FR 2305959
(43) Date de publication de la demande: 18.12.2024
(73) Titulaire: AIRBUS OPERATIONS (S.A.S.), 31060 Toulouse (FR)
(72) Inventeur: FOIX, Vincent, 31060 TOULOUSE (FR)
(74) Mandataire: Fantin, Laurent

(56) Documents cités:
- EP-B1- 0 575 395
- US-A1- 2009 134 147
- US-A1- 2023 036 707

## Description

La présente demande se rapporte à une cuve de réservoir comprenant une virole et au moins une paroi d'extrémité assemblées de manière à limiter les déformations de ladite paroi d'extrémité en fonctionnement ainsi qu'à un réservoir cryogénique comportant au moins une telle cuve.

Le document US 2023/036707 A1 divulgue une cuve, en particulier pour un réservoir à hydrogène liquide, ladite cuve comportant au moins un tronçon central pourvu d'au moins une extrémité dite libre et au moins un dôme pourvu d'une extrémité dite ouverte, ledit dôme et ledit tronçon central étant aptes à être assemblés, l'extrémité libre du tronçon central comprenant un premier élément de liaison, l'extrémité ouverte du dôme comprenant, sur une face externe du dôme, un second élément de liaison, ledit premier élément de liaison et ledit second élément de liaison étant configurés pour former, lorsque le tronçon central et le dôme sont assemblés, une languette saillante s'étendant vers l'extérieur de la cuve et apte à être soudée à une extrémité saillante.

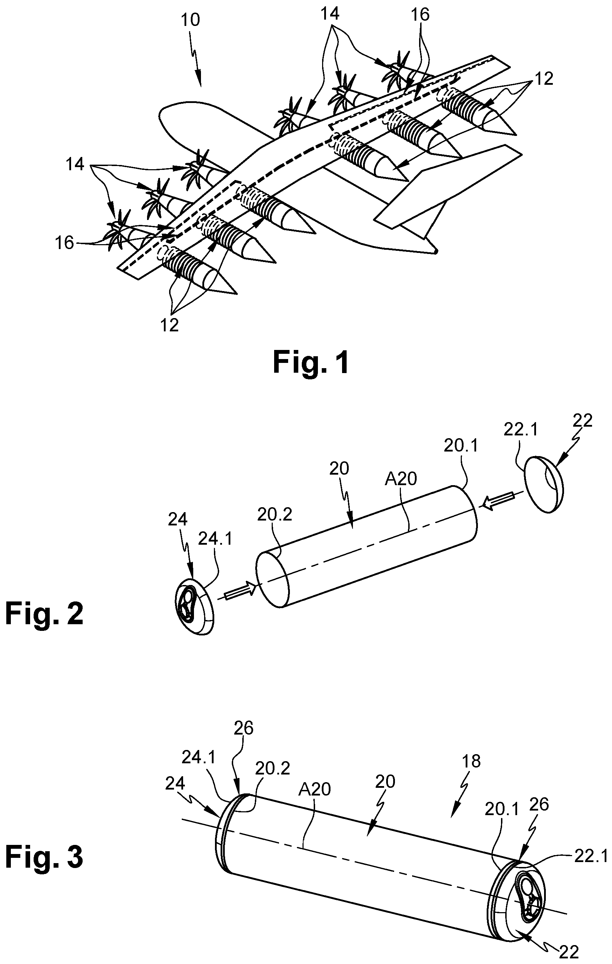

Selon un mode de réalisation visible sur la figure 1, un aéronef 10 comprend plusieurs réservoirs cryogéniques 12 configurés pour stocker de l'hydrogène à l'état cryogénique, plusieurs motorisations 14 fonctionnant à l'hydrogène ainsi qu'un système d'alimentation 16 configuré pour acheminer l'hydrogène des réservoirs 12 vers les motorisations 14. Chaque réservoir cryogénique 12 comprend une cuve interne, une cuve externe dans laquelle est positionnée la cuve interne ainsi que deux systèmes de liaison, diamétralement opposés, reliant les cuves interne et externe.

Selon un mode de réalisation visible sur les figures 2 et 3, chaque cuve 18 comprend une virole 20 qui s'étend entre des première et deuxième extrémités 20.1, 20.2 ainsi que des première et deuxième parois d'extrémité 22, 24 positionnées respectivement au niveau des première et deuxième extrémités 20.1, 20.2 de la virole 20 pour la fermer. La virole 20 est cylindrique et présente un axe de révolution A20.

Pour la suite de la description, une direction longitudinale est parallèle à l'axe de révolution A20. Un plan longitudinal est un plan contenant l'axe de révolution A20. Un plan transversal est perpendiculaire à l'axe de révolution A20. Une direction radiale est perpendiculaire à l'axe de révolution A20.

Chacune des première et deuxième extrémités 20.1, 20.2 de la virole 20 est circulaire et positionnée dans un plan transversal. Chaque paroi d'extrémité 22, 24 présente une forme en dôme et comprend un bord libre 22.1, 24.1 positionné dans un plan et relié à la virole 20 par au moins une ligne de soudure 26 **qui** s'étend sur toute la circonférence de la virole 20.

Selon une première configuration visible sur les figures 2 et 3, pour chaque paroi d'extrémité 22, 24, le bord libre 22.1, 24.1 et la première ou deuxième extrémité 20.1, 20.2 de la virole 20 sont positionnés bout à bout et reliés par la ligne de soudure 26.

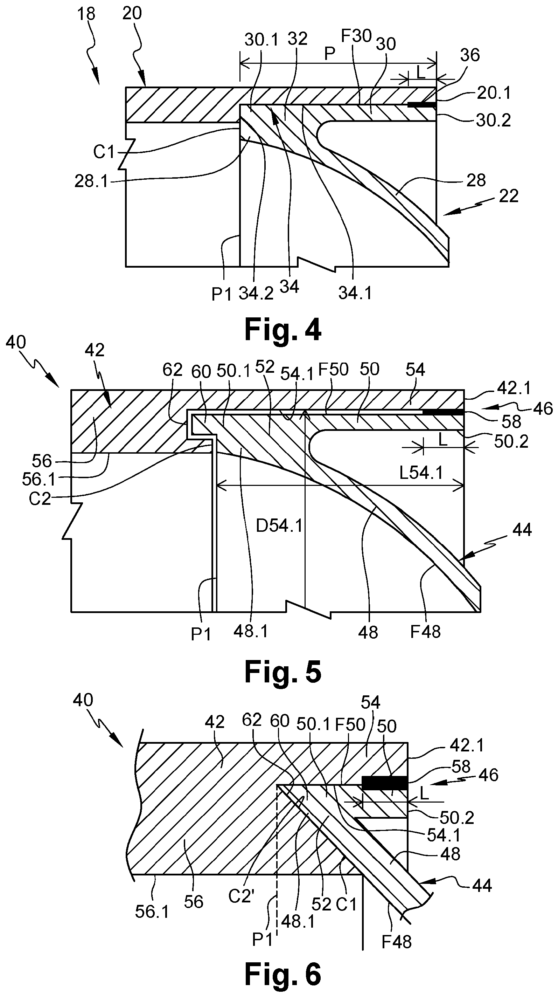

Selon une deuxième configuration visible sur la figure 4, au moins une des parois d'extrémité 22, 24 comprend :
- une partie centrale 28 en forme de dôme qui présente un bord libre 28.1 positionné dans un premier plan P1, le centre de la partie centrale 28 étant décalé selon un premier sens par rapport au premier plan P1,
- un manchon périphérique 30, positionné autour de la partie centrale 28, qui s'étend entre des première et deuxième extrémités 30.1, 30.2, la deuxième extrémité 30.2 étant décalée selon le premier sens par rapport à la première extrémité 30.1,
- une zone de jonction 32 reliant le bord libre 28.1 de la partie centrale 28 et la première extrémité 30.1 du manchon périphérique 30.

Ainsi, la partie centrale 28 et le manchon périphérique 30 forment une unique et même pièce qui présente un chant C1 positionné dans le premier plan P1.

En complément, la virole 20 présente un lamage 34 qui présente une surface latérale intérieure 34.1 et un fond 34.2 distant de la première extrémité 20.1 de la virole 20. La surface latérale intérieure 34.1 présente un diamètre sensiblement égal au diamètre de la surface latérale extérieure F30 du manchon périphérique 30. Le lamage 34 présente une profondeur P (distance séparant le fond 34.2 du lamage 34 et la première extrémité 20.1 de la virole 20) sensiblement égale à la distance séparant les première et deuxième extrémités 30.1, 30.2 du manchon périphérique 30.

Selon cette deuxième configuration, la paroi d'extrémité 22, 24 est positionnée dans le lamage 34, le chant C1 de la paroi d'extrémité 22, 24 étant plaqué contre le fond 34.2 du lamage 34, la deuxième extrémité 30.2 du manchon périphérique 30 étant positionnée sensiblement dans le même plan que la première extrémité 20.1 de la virole 20. La paroi d'extrémité 22, 24 et la virole 20 sont reliées par une soudure 36, positionnée entre la virole 20 et le manchon périphérique 30, qui s'étend sur toute la circonférence de la virole à partir de la deuxième extrémité 30.2 du manchon périphérique 30 et/ou de la première extrémité 20.1 de la virole 20.

La soudure 36 présente une longueur L (dimension prise parallèlement à la direction longitudinale) inférieure à la moitié de la profondeur P du lamage 34.

Par rapport à la première configuration, cette deuxième solution permet de simplifier l'assemblage de la cuve 18 et un éventuel démontage des parois d'extrémité 22, 24.

Comme illustré sur la figure 4, en raison de la pression très élevée du fluide stocké dans la cuve 18, la zone de jonction 32 tend à se déformer selon la direction radiale et à s'écarter de la surface latérale intérieure 34.1 du lamage 34. Ainsi, en fonctionnement, la soudure 36 est soumise à des efforts de cisaillement mais également à des efforts de flexion et de traction en raison de la déformation de la zone de jonction 32. Pour éviter cette déformation, la longueur L de la soudure 36 est augmentée et/ou l'épaisseur (dimension prise dans un plan transversal) du manchon périphérique 30 est augmentée.

Ces solutions ne sont pas satisfaisantes car elles conduisent à augmenter la masse de la cuve, à complexifier son assemblage voire à rendre impossible le démontage et le réassemblage des parois d'extrémité.

La présente invention vise à remédier à tout ou partie des inconvénients de l'art antérieur.

A cet effet, l'invention a pour objet une cuve comprenant une virole qui s'étend entre des première et deuxième extrémités ainsi qu'au moins une paroi d'extrémité positionnée au niveau de la première extrémité ; la paroi d'extrémité comportant une partie centrale en forme de dôme, un manchon périphérique positionné autour de la partie centrale ainsi qu'une zone de jonction reliant la partie centrale et le manchon périphérique et présentant un premier chant ; la virole présentant un axe de révolution et comportant au moins des premier et deuxième tronçons, le premier tronçon s'étendant entre la première extrémité de la virole et le deuxième tronçon, les premier et deuxième tronçons présentant respectivement des première et deuxième surfaces latérales intérieures, la deuxième surface latérale intérieure présentant un diamètre inférieur à celui de la première surface latérale intérieure, la virole présentant un deuxième chant reliant les première et deuxième surfaces latérales intérieures ; la cuve comportant une soudure reliant le premier tronçon de la virole et le manchon périphérique de la paroi d'extrémité.

Selon l'invention, les premier et deuxième chants de la paroi d'extrémité et de la virole présentent des formes configurées pour immobiliser la zone de jonction par rapport à la virole selon une direction radiale perpendiculaire à l'axe de révolution.

La zone de jonction de la paroi d'extrémité ne s'écartant plus du premier tronçon de la virole en fonctionnement en raison de la pression du fluide stocké dans la cuve, la soudure n'est plus soumise à des efforts de flexion et de traction. Par conséquent, il n'est pas nécessaire de rigidifier le manchon périphérique et/ou de renforcer la soudure pour résister à de tels efforts. Selon une autre caractéristique, au moins un élément parmi le premier chant de la paroi d'extrémité et le deuxième chant de la virole comprend ou présente au moins une forme en saillie. En complément, au moins un deuxième élément, différent du premier élément, parmi le premier chant de la paroi d'extrémité et le deuxième chant de la virole comprend, pour chaque forme en saillie, ou délimite partiellement au moins un logement configuré pour loger la forme en saillie afin d'immobiliser la zone de jonction par rapport à la virole selon la direction radiale.

Selon une autre caractéristique, le deuxième chant de la virole et le premier chant de la paroi d'extrémité sont positionnés dans des plans transversaux perpendiculaires à l'axe de révolution.

Selon une autre caractéristique, la paroi d'extrémité comprend une forme, en saillie par rapport au premier chant, sous la forme d'une nervure qui s'étend sur toute la circonférence du premier chant. En complément, la virole présente un logement sous la forme d'une gorge, qui s'étend sur toute la circonférence du deuxième chant, configurée pour loger la nervure. Selon une autre caractéristique, la gorge et la nervure présentent des sections complémentaires.

Selon une autre caractéristique, la nervure est située dans le prolongement de la surface latérale extérieure du manchon périphérique.

Selon une autre caractéristique, les premier et deuxième tronçons sont reliés par un deuxième chant tronconique qui s'évase en s'écartant de la première extrémité de la virole, le premier chant de la paroi d'extrémité étant tronconique et présentant une conicité sensiblement identique à celle du deuxième chant de la virole.

L'invention a également pour objet un réservoir cryogénique comprenant une cuve selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue en perspective d'une cuve en cours d'assemblage illustrant un mode d'assemblage de l'art antérieur,
- La figure 3 est une vue en perspective de la cuve visible sur la figure 2 en fin d'assemblage,
- La figure 4 est une coupe longitudinale d'une partie d'une cuve illustrant un mode de réalisation de l'art antérieur,
- La figure 5 est une coupe longitudinale d'une partie d'une cuve illustrant un mode de réalisation de l'invention,
- La figure 6 est une coupe longitudinale d'une partie d'une cuve illustrant un autre mode de réalisation de l'invention.

Selon des modes de réalisation visibles sur les figures 5 et 6, une cuve 40 comprend une virole 42 qui s'étend entre des première et deuxième extrémités 42.1, au moins une première paroi d'extrémité 44 positionnée au niveau de la première extrémité 42.1 de la virole 42 pour la fermer ainsi qu'au moins un premier assemblage 46 reliant la première paroi d'extrémité 44 et la première extrémité 42.1 de la virole 42.

Dans un but de simplification, seule la première extrémité 42.1 de la virole est représentée sur les figures 5 et 6. De même, seule une partie du premier assemblage 46 reliant la première paroi d'extrémité 44 et la virole 42 est visible sur les figures 5 et 6.

La cuve 40 comprend une deuxième paroi d'extrémité reliée à la deuxième extrémité de la virole 42 par un deuxième assemblage. Selon une configuration, la deuxième paroi d'extrémité et le deuxième assemblage sont respectivement identiques à la première paroi d'extrémité 44 et au premier assemblage 46. En variante, la deuxième paroi d'extrémité pourrait être différente de la première paroi d'extrémité 44 et/ou le deuxième assemblage pourrait être différent du premier assemblage 46.

Selon une application, la cuve 40 est configurée pour stocker à l'état cryogénique et à haute pression un fluide comme de l'hydrogène. Selon un agencement, un réservoir cryogénique prévu pour stocker un fluide à l'état cryogénique, comme de l'hydrogène par exemple, et être positionné dans un véhicule, comme un aéronef par exemple, comprend au moins une cuve. Selon un mode de réalisation, le réservoir cryogénique comprend une cuve interne ainsi qu'une cuve externe dans laquelle est positionnée la cuve interne, au moins l'une des cuves parmi les cuves interne et externe étant conforme à la cuve 40 dont une partie est visible sur les figures 5 et 6.

Selon une configuration, la virole 42 est cylindrique ou légèrement tronconique et présente un axe de révolution. Chacune des première et deuxième extrémités 42.1 de la virole 42 est circulaire et positionnée dans un plan transversal.

Selon les modes de réalisation visibles sur les figures 5 et 6, la paroi d'extrémité 44 comprend :
- une partie centrale 48 en forme de dôme qui présente un bord libre 48.1 positionné dans un premier plan P1, la partie centrale 48 présentant un centre décalé selon un premier sens par rapport au premier plan P1,
- un manchon périphérique 50, positionné autour de la partie centrale 48, qui s'étend entre des première et deuxième extrémités 50.1, 50.2, la deuxième extrémité 50.2 étant décalée selon le premier sens par rapport à la première extrémité 50.1,
- une zone de jonction 52 reliant le bord libre 48.1 de la partie centrale 48 et la première extrémité 50.1 du manchon périphérique 50.

Ainsi, la partie centrale 48 et le manchon périphérique 50 forment une unique et même pièce. La zone de jonction 52 présente un premier chant C1.

La partie centrale 48 présente une surface intérieure F48 orientée vers l'intérieur de la cuve 40. Le manchon périphérique 50 présente une surface latérale extérieure F50 opposée à la partie centrale 48 et orientée vers la virole 42.

La virole 42 comprend au moins des premier et deuxième tronçons 54, 56 coaxiaux entre eux et à l'axe de révolution de la virole 42, le premier tronçon 54 étant cylindrique et s'étendant entre la première extrémité 42.1 de la virole 42 et le deuxième tronçon 56. Le premier tronçon 54 comprend une première surface latérale intérieure 54.1. Le deuxième tronçon 56 comprend une deuxième surface latérale intérieure 56.1 présentant un diamètre inférieur à celui de la première surface latérale intérieure 54.1. Le premier tronçon 54 est configuré pour loger le manchon périphérique 50 de la paroi d'extrémité 44.

Selon une première configuration visible sur la figure 5, les première et deuxième surfaces latérales intérieures 54.1, 56.1 des premier et deuxième tronçons 54, 56 sont reliées par un deuxième chant C2 annulaire positionné dans un plan transversal (perpendiculaire à l'axe de révolution de la virole 42). Selon cette première configuration, la première surface latérale intérieure 54.1 et le deuxième chant C2 forment un lamage.

Selon une deuxième configuration visible sur la figure 6, les première et deuxième surfaces latérales intérieures 54.1, 56.1 des premier et deuxième tronçons 54, 56 sont reliés par un deuxième chant C2' tronconique qui s'évase en s'écartant de la première extrémité 42.1 de la virole 42.

La première surface latérale intérieure 54.1 du premier tronçon 54 présente un diamètre D54.1 et une dimension longitudinale L54.1 correspondant à une dimension prise parallèlement à la direction longitudinale entre la première extrémité 42.1 de la virole 42 et le deuxième chant C2, C2'. Le diamètre D54.1 de la première surface latérale intérieure 54.1 du premier tronçon 54 est sensiblement égal ou très légèrement supérieur au diamètre de la surface latérale extérieure F50 du manchon périphérique 50. Selon un agencement, la dimension longitudinale L54.1 de la première surface latérale intérieure 54.1 du premier tronçon 54 est déterminée de manière à ce que lorsque la paroi d'extrémité 44 est positionnée dans le premier tronçon 54 et contre le deuxième chant C2, C2' de la virole 42, la deuxième extrémité 50.2 du manchon périphérique 50 est positionnée approximativement dans un même plan transversal que la première extrémité 42.1 de la virole 42.

La cuve (plus particulièrement l'assemblage 46) comprend une soudure 58 positionnée entre la virole 42 et la paroi d'extrémité 44, plus particulièrement entre le premier tronçon 54 de la virole 42 et le manchon périphérique 50 de la paroi d'extrémité 44, qui s'étend à partir de la deuxième extrémité 50.2 du manchon périphérique 50 de la paroi d'extrémité 44 et/ou de la première extrémité 42.1 de la virole 42. Cette soudure 58 présente une longueur L qui correspond à une dimension prise parallèlement à la direction longitudinale. Selon une configuration, la longueur L est inférieure à la moitié de la dimension longitudinale L54.1 de la première surface latérale intérieure 54.1 du premier tronçon 54. Cette soudure 58 s'étend de manière continue sur toute la circonférence de la virole 42. Elle peut être réalisée par tout procédé de soudage approprié comme un procédé de soudage par friction par exemple. Selon une caractéristique de l'invention, les premier et deuxième chants C1, C2, C2' de la paroi d'extrémité 44 et de la virole 42 présentent des formes configurées pour immobiliser la zone de jonction 52 par rapport à la virole 42 selon une direction radiale. La zone de jonction 52 de la paroi d'extrémité 44 ne s'écartant pas du premier tronçon 54 de la virole 42, plus particulièrement de sa première surface latérale intérieure 54.1, en fonctionnement en raison de la pression du fluide stocké dans la cuve 40, la soudure 58 n'est plus soumise à des efforts de flexion et de traction. Par conséquent, il n'est pas nécessaire de rigidifier le manchon périphérique 50 et/ou de renforcer la soudure 58 pour résister à de tels efforts.

Selon la deuxième configuration visible sur la figure 6, le premier chant C1 de la paroi d'extrémité 44 présente une forme en saillie 60 et le deuxième chant C2' de la virole 42 délimite partiellement un logement 62 configuré pour loger la forme en saillie 60 afin d'immobiliser la zone de jonction 52 par rapport à la virole 42 selon la direction radiale. Selon un agencement, le premier chant C1 de la paroi d'extrémité 44 est tronconique et présente une conicité sensiblement identique à celle du deuxième chant C2' de la virole 42. En complément, la virole 42 présente une gorge frontale, délimitée par la première surface latérale intérieure 54.1 du premier tronçon 54 et le deuxième chant C2', qui s'étend sur toute la circonférence de la virole 42 et loge au moins une partie saillante de la zone de jonction 52 de la paroi d'extrémité 44. Selon un agencement, le premier chant C1 prolonge sans discontinuité la surface intérieure F48 de la partie centrale 48 de la paroi d'extrémité 44. Selon la première configuration visible sur la figure 5, les premier et deuxième chants C1, C2 de la paroi d'extrémité 44 et de la virole 42 sont positionnés dans des plans transversaux. Selon la première configuration, au moins un élément parmi le premier chant C1 de la paroi d'extrémité 44 et le deuxième chant C2 de la virole 42 comprend au moins une forme en saillie 60. En complément, au moins un deuxième élément, différent du premier élément, parmi le premier chant C1 de la paroi d'extrémité 44 et le deuxième chant C2 de la virole 42 comprend, pour chaque forme en saillie 60, au moins un logement 62 configuré pour loger la forme en saillie 60 afin d'immobiliser la zone de jonction 52 par rapport à la virole 42 selon la direction radiale.

Selon un agencement, la paroi d'extrémité 44 comprend plusieurs formes en saillie 60 par rapport au premier chant C1, disjointes et réparties sur la circonférence du premier chant C1. En complément, la virole 42 comprend, au niveau du deuxième chant C2, un logement 62 pour chaque forme en saillie 60.

Selon un autre agencement visible sur la figure 5, la paroi d'extrémité 44 comprend une unique forme, en saillie 60 par rapport au premier chant C1, sous la forme d'une nervure qui s'étend sur toute la circonférence du premier chant C1. En complément, la virole 42 présente un unique logement 62 sous la forme d'une gorge, qui s'étend sur toute la circonférence du deuxième chant C2, configurée pour loger la nervure. Cette gorge et cette nervure présentent des sections complémentaires comme en U par exemple. Bien entendu, l'invention n'est pas limitée à cette géométrie pour les sections de la nervure et de la gorge. Selon une configuration, la nervure est située dans le prolongement de la surface latérale extérieure F50 du manchon périphérique 50. En complément, le logement 62 en forme de gorge est situé dans le prolongement de la première surface latérale intérieure 54.1 du premier tronçon 54.

## Revendications

1. Cuve comprenant une virole (42) qui s'étend entre des première et deuxième extrémités (42.1) ainsi qu'au moins une paroi d'extrémité (44) positionnée au niveau de la première extrémité (42.1) ; la paroi d'extrémité (44) comportant une partie centrale (48) en forme de dôme, un manchon périphérique (50) positionné autour de la partie centrale (48) ainsi qu'une zone de jonction (52) reliant la partie centrale (48) et le manchon périphérique (50) et présentant un premier chant (C1) ; la virole (42) présentant un axe de révolution et comportant au moins des premier et deuxième tronçons (54, 56), le premier tronçon (54) s'étendant entre la première extrémité (42.1) de la virole (42) et le deuxième tronçon (56), les premier et deuxième tronçons (54, 56) présentant respectivement des première et deuxième surfaces latérales intérieures (54.1, 56.1), la deuxième surface latérale intérieure (56.1) présentant un diamètre inférieur à celui de la première surface latérale intérieure (54.1), la virole (42) présentant un deuxième chant (C2, C2') reliant les première et deuxième surfaces latérales intérieures (54.1, 56.1) ; la cuve comportant une soudure (58) reliant le premier tronçon (54) de la virole (42) et le manchon périphérique (50) de la paroi d'extrémité (44) ; **caractérisé en ce que** les premier et deuxième chants (C1, C2, C2') de la paroi d'extrémité (44) et de la virole (42) présentent des formes configurées pour immobiliser la zone de jonction (52) par rapport à la virole (42) selon une direction radiale perpendiculaire à l'axe de révolution.

2. Cuve selon la revendication précédente, **caractérisée en ce qu'**au moins un élément parmi le premier chant (C1) de la paroi d'extrémité (44) et le deuxième chant (C2) de la virole (42) comprend ou présente au moins une forme en saillie (60) et **en ce qu'**au moins un deuxième élément, différent du premier élément, parmi le premier chant (C1) de la paroi d'extrémité (44) et le deuxième chant (C2) de la virole (42) comprend, pour chaque forme en saillie (60), ou délimite partiellement au moins un logement (62) configuré pour loger la forme en saillie (60) afin d'immobiliser la zone de jonction (52) par rapport à la virole (42) selon la direction radiale.

3. Cuve selon la revendication précédente, **caractérisée en ce que** le deuxième chant (C2) de la virole (42) et le premier chant (C1) de la paroi d'extrémité (44) sont positionnés dans des plans transversaux perpendiculaires à l'axe de révolution.

4. Cuve selon l'une des revendications 2 à 3, **caractérisée en ce que** la paroi d'extrémité (44) comprend une forme, en saillie (60) par rapport au premier chant (C1), sous la forme d'une nervure qui s'étend sur toute la circonférence du premier chant (C1) et **en ce que** la virole (42) présente un logement (62) sous la forme d'une gorge, qui s'étend sur toute la circonférence du deuxième chant (C2), configurée pour loger la nervure.

5. Cuve selon la revendication précédente, **caractérisée en ce que** la gorge et la nervure présentent des sections complémentaires.

6. Cuve selon l'une des revendications 4 à 5, **caractérisée en ce que** le manchon périphérique (50) présente une surface latérale extérieure (F50) orientée vers le premier tronçon (54) et **en ce que** la nervure est située dans le prolongement de la surface latérale extérieure (F50) du manchon périphérique (50).

7. Cuve selon la revendication 1 ou 2, **caractérisée en ce que** les premier et deuxième tronçons (54, 56) sont reliés par un deuxième chant (C2') tronconique qui s'évase en s'écartant de la première extrémité (42.1) de la virole (42) et **en ce que** le premier chant (C1) de la paroi d'extrémité (44) est tronconique et présente une conicité sensiblement identique à celle du deuxième chant (C2') de la virole (42).

8. Réservoir cryogénique comprenant au moins une cuve selon l'une des revendications précédentes.

## Patentansprüche

1. Behälter mit einem Mantel (42), der sich zwischen einem ersten und einem zweiten Ende (42.1) erstreckt, und wenigstens einer Endwand (44), die im Bereich des ersten Endes (42.1) angeordnet ist, wobei die Endwand (44) einen kuppelförmigen Mittelteil (48), eine um den Mittelteil (48) herum angeordnete Umfangshülse (50) sowie einen Verbindungsbereich (52) aufweist, der den Mittelteil (48) und die Umfangshülse (50) verbindet und eine erste Kante (Cl) umfasst, wobei der Mantel (42) eine Rotationsachse aufweist und wenigstens einen ersten und einen zweiten Abschnitt (54, 56) umfasst, wobei sich der erste Abschnitt (54) zwischen dem ersten Ende (42.1) des Mantels (42) und dem zweiten Abschnitt (56) erstreckt, wobei der erste und der zweite Abschnitt (54, 56) jeweils eine erste und eine zweite innere Seitenfläche (54.1, 56.1) aufweist, wobei die zweite innere Seitenfläche (56.1) einen kleineren Durchmesser als die erste innere Seitenfläche (54.1) hat, wobei der Mantel (42) eine zweite Kante (C2, C2') aufweist, die die erste und die zweite innere Seitenfläche (54.1, 56.1) verbindet, wobei der Behälter eine Schweißnaht (58) aufweist, die den ersten Abschnitt (54) des Mantels (42) und die Umfangshülse (50) der Endwand (44) verbindet, **dadurch gekennzeichnet, dass** die erste und zweite Kante (Cl, C2, C2') der Endwand (44) und des Mantels (42) Formen aufweisen, die dazu eingerichtet sind, den Verbindungsbereich (52) in Bezug auf den Mantel (42) in eine radiale Richtung im rechten Winkel zur Rotationsachse zu fixieren.

2. Behälter nach dem vorhergehenden Anspruch, **dadurch gekennzeichnet, dass** wenigstens ein Element unter der ersten Kante (Cl) der Endwand (44) und der zweiten Kante (C2) des Mantels (42) wenigstens eine vorstehende Form (60) umfasst oder aufweist und dass wenigstens ein zweites Element, das sich von dem ersten Element unterscheidet, unter der ersten Kante (Cl) der Endwand (44) und der zweiten Kante (C2) des Mantels (42) für jede vorstehende Form (60) wenigstens eine Aufnahme (62) umfasst oder teilweise begrenzt, die dazu eingerichtet ist, die vorstehende Form (60) aufzunehmen, um den Verbindungsbereich (52) in Bezug auf die Hülse (42) in radialer Richtung zu fixieren.

3. Behälter nach dem vorhergehenden Anspruch, **dadurch gekennzeichnet, dass** die zweite Kante (C2) des Mantels (42) und die erste Kante (Cl) der Endwand (44) in Querebenen im rechten Winkel zur Rotationsachse angeordnet sind.

4. Behälter nach einem der Ansprüche 2 bis 3, **dadurch gekennzeichnet, dass** die Endwand (44) eine in Bezug auf die erste Kante (Cl) vorstehende Form (60) in Form eines Stegs umfasst, der sich über den gesamten Umfang der ersten Kante (Cl) erstreckt, und dass der Mantel (42) eine Aufnahme (62) in Form einer Nut aufweist, die sich über den gesamten Umfang der zweiten Kante (C2) erstreckt und dazu eingerichtet ist, den Steg aufzunehmen.

5. Behälter nach dem vorhergehenden Anspruch, **dadurch gekennzeichnet, dass** die Nut und der Steg komplementäre Querschnitte aufweisen.

6. Behälter nach einem der Ansprüche 4 bis 5, **dadurch gekennzeichnet, dass** die Umfangshülse (50) eine äußere Seitenfläche (F50) aufweist, die dem ersten Abschnitt (54) zugewandt ist, und dass der Steg in der Verlängerung der äußeren Seitenfläche (F50) der Umfangshülse (50) angeordnet ist.

7. Behälter nach Anspruch 1 oder 2, **dadurch gekennzeichnet, dass** der erste und der zweite Abschnitt (54, 56) durch eine zweite kegelstumpfförmige Kante (C2') verbunden sind, die sich vom ersten Ende (42.1) des Mantels (42) weg aufweitet, und dass die erste Kante (C1) der Endwand (44) kegelstumpfförmig ist und eine Konizität aufweist, die im Wesentlichen gleich derjenigen der zweiten Kante (C2') des Mantels (42) ist.

8. Kryotank, der wenigstens einen Behälter nach einem der vorhergehenden Ansprüche umfasst.

## Claims

1. Tank comprising a shell (42) that extends between first and second ends (42.1) and at least one end wall (44) positioned at the first end (42.1); the end wall (44) having a central part (48) in the shape of a dome, a peripheral sleeve (50) positioned around the central part (48) and a junction zone (52) connecting the central part (48) and the peripheral sleeve (50) and having a first edge face (C1); the shell (42) having an axis of revolution and having at least first and second portions (54, 56), the first portion (54) extending between the first end (42.1) of the shell (42) and the second portion (56), the first and second portions (54, 56) respectively having first and second inner lateral surfaces (54.1, 56.1), the second inner lateral surface (56.1) having a diameter smaller than that of the first inner lateral surface (54.1), the shell (42) having a second edge face (C2, C2') connecting the first and second inner lateral surfaces (54.1, 56.1); the tank having a weld (58) connecting the first portion (54) of the shell (42) and the peripheral sleeve (50) of the end wall (44); wherein the first and second edge faces (C1, C2, C2') of the end wall (44) and of the shell (42) have shapes configured to immobilize the junction zone (52) with respect to the shell (42) in a radial direction perpendicular to the axis of revolution.

2. Tank as claimed in the preceding claim, wherein at least one element among the first edge face (C1) of the end wall (44) and the second edge face (C2) of the shell (42) comprises or has at least one projecting shape (60) and wherein at least one second element, different from the first element, among the first edge face (C1) of the end wall (44) and the second edge face (C2) of the shell (42) comprises, for each projecting shape (60), or partially delimits at least one housing (62) configured to house the projecting shape (60) in order to immobilize the junction zone (52) with respect to the shell (42) in the radial direction.

3. Tank as claimed in the preceding claim, wherein the second edge face (C2) of the shell (42) and the first edge face (C1) of the end wall (44) are positioned in transverse planes perpendicular to the axis of revolution.

4. Tank as claimed in either of claims 2 and 3, wherein the end wall (44) comprises a shape (60), projecting with respect to the first edge face (C1), in the form of a rib that extends over the entire circumference of the first edge face (C1) and wherein the shell (42) has a housing (62) in the form of a groove, which extends over the entire circumference of the second edge face (C2), configured to house the rib.

5. Tank as claimed in the preceding claim, wherein the groove and the rib have complementary sections.

6. Tank as claimed in either of claims 4 and 5, wherein the peripheral sleeve (50) has an outer lateral surface (F50) oriented toward the first portion (54) and wherein the rib is situated in the continuation of the outer lateral surface (F50) of the peripheral sleeve (50).

7. Tank as claimed in claim 1 or 2, wherein the first and second portions (54, 56) are connected by a second, frustoconical edge face (C2') that flares away from the first end (42.1) of the shell (42) and wherein the first edge face (C1) of the end wall (44) is frustoconical and has a conicity substantially identical to that of the second edge face (C2') of the shell (42).

8. Cryogenic reservoir comprising at least one tank as claimed in one of the preceding claims.
